# EUROPEAN PATENT APPLICATION

(11) **EP 1 065 613 A2**
(43) Date of publication of application: **03.01.2001**
(21) Application number: 00113588.8
(22) Date of filing: 27.06.2000
(51) Int. Cl.: G06F 17/60

(54) **Document producing method, document producing apparatus, document producing network system capable of producing home-page document customized for client needs, and recording medium**

(30) Priority: 28.06.1999 JP 18211199; 28.06.1999 JP 18211299
(71) Applicant: Casio Computer Co., Ltd., Shibuya-ku, Tokyo 151-8543 (JP)
(72) Inventor: Yamakita, Tooru, Fussa-shi, Tokyo (JP)
(74) Representative: Grünecker, Kinkeldey, Stockmair & Schwanhäusser Anwaltssozietät

(57) **Abstract**

In a document producing apparatus while a client requests a WWW server to transmit a desirable document such as a customized home page, this WWW server produces such a desirable customized home page and then transmits this home page via the Internet to the client. The document producing apparatus is comprised of: structural component storage means for storing thereinto plural structural components of plural documents in correspondence with a plurality of positional information; request receiving means for receiving a request issued from a client; positional information acquiring means for acquiring positional information of the client which issues the request received by the request receiving means; structural component extracting means for extracting a structural component of a document in correspondence with the positional information acquired by the positional information acquiring means from the structural component storage means; document producing means for producing a document to be transmitted based upon the structural component of the document extracted by the structural component extracting means; and document transmitting mens for transmitting the document produced by the document producing means via a communication line to the client which issues the request.

## Description

The present invention is related to a document producing method, a document producing apparatus, a document producing network system, capable of producing a customized document such as a customized home page of the World Wide Web (WWW) in answer to a request of a user, and also related to a recording medium for recording thereon a computer readable program used to produce such a document.

Very recently, the Internet is widely used as means capable of transmitting/receiving information. Concretely speaking, since a user of a terminal apparatus requests a WWW (World Wide Web) server provided on the Internet to transmit a home page, the home page transmitted from the WWW server in response to this request can be observed by the terminal apparatus.

While home pages registered in the above-described WWW server may be utilized as personal use, a large number of home pages are utilized as commercial purposes. In general, such home pages used as commercial purposes contain advertisement information in the form of the home page information described by the HTML (Hyper Text Mark-up Language).

On the other hand, advertisement information may provide extensive advertising effects not only to advertisement given in home pages, but also to advertisement suitable for subject persons. For example, the extensive advertising effects may be achieved as follows: In the case of a commercial shop, while information about special discount sale and introductions of sale events are provided as advertisement information with respect to inhabitants living near this shop, information about mail orders is provided as advertisement information with respect to any persons located far from this shop.

However, in a conventional network system using the Internet, the same home pages are provided from the WWW server to any terminals. Even when there are differences in commercial goods and also service fees, depending upon regional areas, the advertisement information could not be provided in the form of a single home page. As a consequence, such extensive advertisement information obtained in accordance with to the regional area could not be provided.

Also, with respect to accessing operations to home pages, a ratio of accessing operations to commercial-use home pages to accessing operations to personal-use home pages in day time becomes very large, whereas a ratio of accessing operations to personal-use home pages to accessing operations to commarcial-use home pages in night time becomes very large. Normally, there is a difference between commercial-use advertisement information and personal-use advertisement information. However, in the conventional network system, even when requests of transmitting of home pages are issued from terminal apparatuses in any time ranges, the same home pages are usually and continuously provided by the WWW server except for such a case that contents of home pages are updated. As a result, in such a conventional network system, the WWW server could not provide the extensive advertisement information, depending upon time ranges.

To solve such problems, the following advertisement information providing idea may be conceived. That is, while various sorts of advertisement information are additionally contained in a single home page, even when any persons request to send desirable advertisement information, suitable advertisement information may be necessarily provided. However, when a large amount of unnecessary advertisement information is contained in the entire home page, since the originally required advertisement information cannot relatively become conspicuous, the resulting advertisement effect would be lost. Furthermore, since the data size of such a home page is large, the resources (CPU and memory) of the terminal apparatus and the network are uselessly, or ineffectively utilized.

In addition, a certain home page contains a map, for example, used to guide a route to a target place such as a shopping center. Users who access this home page may readily reach this target place with reference to this map.

However, conventionally, since the same home pages are provided to any terminals from the WWW server, the same maps are given to any users of this home page irrespective of the present positions of these users. As a consequence, when a present position of one user does not appear on this map, this user must seek a proper route to a certain place actually indicated on this map by using any other seeking methods.

The present invention has been made to solve the above-described problems, and therefore, has an object to provide a document producing system, a document producing apparatus, a document producing method, which can produce a suitable document such as a customized home page in response to a request issued from a client, and further to provide a recording medium for recording thereon a computer readable program capable of producing such a proper document. Moreover, the present invention has another object to provide a document producing system, a document producing apparatus, a document producing method, capable of producing such a document which contains guide information for guiding a user to a target place related to a present position of a document request source, and also to provide a recording medium for recording thereon a computer readable program capable of producing such a document with guide information.

To achieve the above-explained objects, a document producing system, according to a first aspect of the present invention, is featured by comprising:
structural component storage means for storing thereinto plural structural components of plural documents in correspondence with a plurality of positional information;
request receiving means for receiving a request issued from a client;
positional information acquiring means for acquiring positional information of the client which issues the request received by the request receiving means;
structural component extracting means for extracting a structural component of a document in correspondence with the positional information acquired by the positional information acquiring means from the structural component storage means;
document producing means for producing a document to be transmitted based upon the structural component of the document extracted by the structural component extracting means; and
document transmitting mens for transmitting the document produced by the document producing means via a communication line to the client which issues the request.

The document producing apparatus may be further comprised of:
regional area information storing means for storing thereinto a plurality of regional area information in correspondence with the plurality of positional information; and
regional area information acquiring means for acquiring such regional area information corresponding to the positional information acquired by the regional area information acquiring means from the regional area information storage means.

In this case, the structural component extracting means may extract a structural component of a document in correspondence with the regional area information acquired by the regional area information acquiring means from the structural component storage means.

Also, the document producing apparatus may be further comprised of:
time information acquiring means for acquiring predetermined time information when the request receiving means receives a request;
the structural component storage means further stores thereinto a structural component of a document in correspondence with the time information.

The structural component extracting means may further extract the structural component of the document in correspondence with the time information acquired by the time information acquiring means from the structural component storage means.

In the above-described document producing system, while the positional information of the client which requests the transmission of the document is acquired, the document to be sent to the client is produced based upon the structural component corresponding to this acquired positional information. Then, in the client, the document produced in accordance with the positional information is outputted from the document output apparatus. In other words, such a document containing proper information in correspondence with the present position of the client can be provided from the server. For example, when the advertisement information is provided as th proper information, the extensive advertisement effect can be achieved.

It should be noted that the positional information acquiring means may acquire the positional information of the client based upon the information of the communication route, or the information saved in the server in correspondence with the client which requests to send the document. The communication route is defined based upon, for example, information supplied from the client in such a manner that the request is issued from the client and then is transmitted to the server.

Furthermore, in order to achieve the above-described objects, a document producing system, according to a second aspect of the present invention, is featured by comprising:
request receiving means for receiving a request issued from a client;
positional information acquiring means for acquiring positional information of the client which issues the request received by the request receiving means;
guide information producing means for producing guide information defined from a location indicated by the positional information up to a preselected location based upon the positional information acquired by the information acquiring means;
document producing means for producing a document with which the guide information produced by the guide information producing means is combined; and
document transmitting means for transmitting the document produced by the document producing means via a communication line to the client which issues the request.

The above-described document producing apparatus produces the document containing the guide information, and then transmits this document to the client. This guide information guides the route from the location indicated by the positional information of the client up to a preselected location. Since the user of the client which receives this document outputs this received document from the output apparatus, the user can obtain the guide information to such a preselected location made in correspondence with the own position.

Also, the document producing apparatus may be further comprised of: map storage means for storing therein a map of a range which contains at least the preselected location.

In this case, the guide information producing means may produce as the guide information, such a map containing the preselected location and a location indicated by the positional information acquired by the positional information acquiring means based upon the map stored in the map storage means.

Also, the guide information producing means may be comprised of: means for drawing a predetermined symbol on the location appearing on a map produced as the guide information, the location being indicated by the positional information acquired by the positional information acquiring means.

Also, the guide information producing means may be comprised of: means for drawing a route appearing on a map produced as the guide information, the route being defined from a location indicated by the positional information acquired by the positional information acquiring means up to the preselected location.

Furthermore, the guide information producing means may be further comprised of means for producing an enlarged map in addition to the map containing both a preselected location and a location indicated by the positional information acquired by the positional information acquiring means. The size of this enlarged map is larger than the size of this map, and this enlarged map contains the above-explained preselected location.

On the other hand, the guide information producing means may be comprised of means for calculating both a direction and a distance, defined from a location indicated by the positional information acquired by the positional information acquiring means up to a preselected location. In this case, the document producing means may produce a document formed by combining both the direction and the distance calculated by the guide information producing means into a sentence.

In the above-explained document producing system, the document containing the guide information defined from the location indicated by the positional information of the client up to the preselected location is produced in the server. Then, this produced document is outputted from the document output means of the client. In other words, the user of the client can acquire the guide information guide to such a location corresponding to the own position.

It should be noted that the positional information acquiring means may acquire the positional information of the client based upon the information supplied from the client, for example, the information about the communication path along which the request is transmitted from the client up to the server, or based on the information saved in the server in correspondence with the client which issues such a request. As previously described in detail, in accordance with the present invention, the suitable document (e.g. customized home page) can be produced in response to the request of the client, so that the information (e.g. advertisement information) can be effectively provided. Furthermore, such a document can be produced which contains the guide information guided to a preselected location related to the position of the request source.

For a better understanding of the present invention, reference is made of a detailed description to be read in conjunction with the accompanying drawings, in which:
Fig. 1A is a schematic diagram for showing a structure of a network system to which the inventive idea according to a first embodiment mode of the present invention is applied;
Fig. 1B illustratively shows a regional area map for representing the WWW server and clients of the network system shown in Fig. 1A;
Fig. 2 is a schematic block diagram for indicating the arrangement of the WWW server shown in Fig. 1;
Fig. 3 is a schematic block diagram for representing the arrangement of the client shown in Fig. 1;
Fig. 4 is a diagram for representing an example of a storage format of information used in a home page database of Fig. 2;
Fig. 5 is a flow chart for describing a process operation executed by the WWW server employed in the network system according to the first embodiment mode of the present invention;
Fig. 6 is a flow chart for describing a process operation executed by the client of the network system according to the first embodiment mode of the present invention;
Fig. 7A illustratively shows an example of a home page of default;
Fig. 7B illustratively indicates an example of a home page which is rewritten in accordance with a regional area of a request source;
Fig. 7C illustratively represents an example of a home page which is rewritten in accordance with request time;
Fig. 8A and Fig. 8B are diagrams for showing image data contained in home pages before/after data rewriting operation is executed;
Fig. 9A and Fig. 9B are diagrams for indicating character string data contained in home pages before/after data rewriting operation is executed;
Fig. 10 is a flow chart for describing a process operation executed by a WWW server in a network system according to a second embodiment mode of the present invention;
Fig. 11 is a flow chart for explaining a process operation executed by a client in the network system according to the second embodiment mode of the present invention;
Figs. 12A - 12E are diagrams for indicating an example of a home page produced in the network system according to the second embodiment mode of the present invention;
Fig. 13 is a flow chart for describing a process operation executed by a WWW server in a network system according to a third embodiment mode of the present invention;
Figs. 14A and 14B are diagrams for indicating an example of a home page produced in the network system according to the third embodiment mode of the present invention; and
Figs. 15A and 15b illustratively show another example of a home page by the network system of the present invention.

Referring now to drawings, various preferred embodiment modes of the present invention will be described.

### OVERALL NETWORK SYSTEM

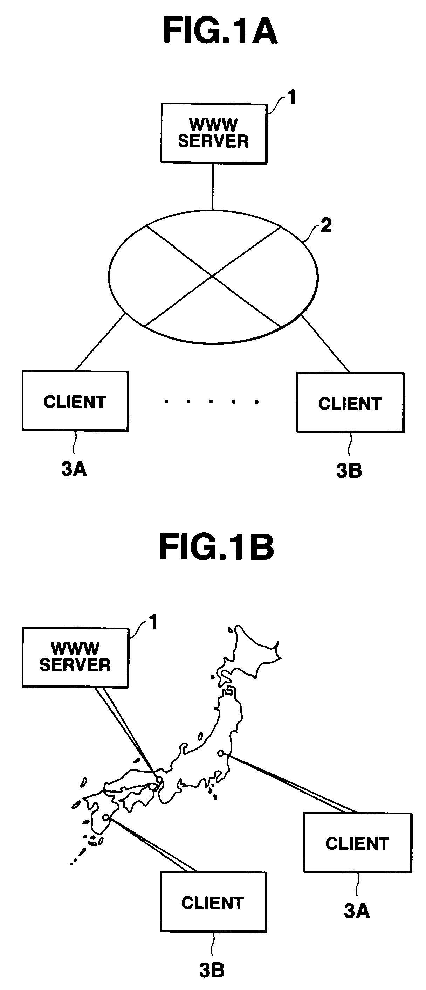

Fig. 1A illustratively shows a structure of a network system to which a first embodiment mode of the present invention is applied. As indicated in this drawing, the overall structure of this network system is arranged by a WWW (World Wide Web) server 1, and two clients 3A and 3B which are connected via the Internet 2 to the WWW server 1. As shown in a regional area map of Fig. 1B, for example, it is now assumed that the WWW server 1 is located in KOBE city, the client 3A is located in FUKUSHIMA city, and the client 3B is located in MIYAZAKI city in Japan.

### INTERNAL ARRANGEMENT OF WWW SERVER 1

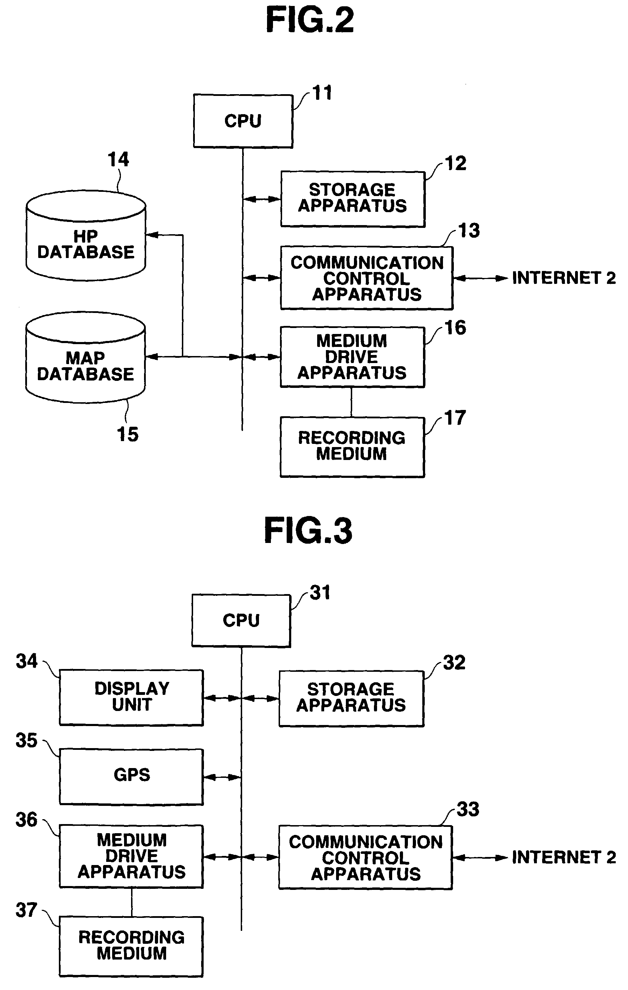

Fig. 3 is a schematic block diagram for indicating an internal arrangement of the WWW server 1 used in the network system of Figs. 1A and 1B. As indicated in this drawing, the WWW server 1 is arranged by a general-purpose computer, and a CPU (Central Processing Unit) 11, a storage apparatus 12, a communication control apparatus 13, a home page (HP) database 14, a map database 15, and a medium drive apparatus 16. A recording medium 17 is detachably mounted on this medium drive apparatus 16.

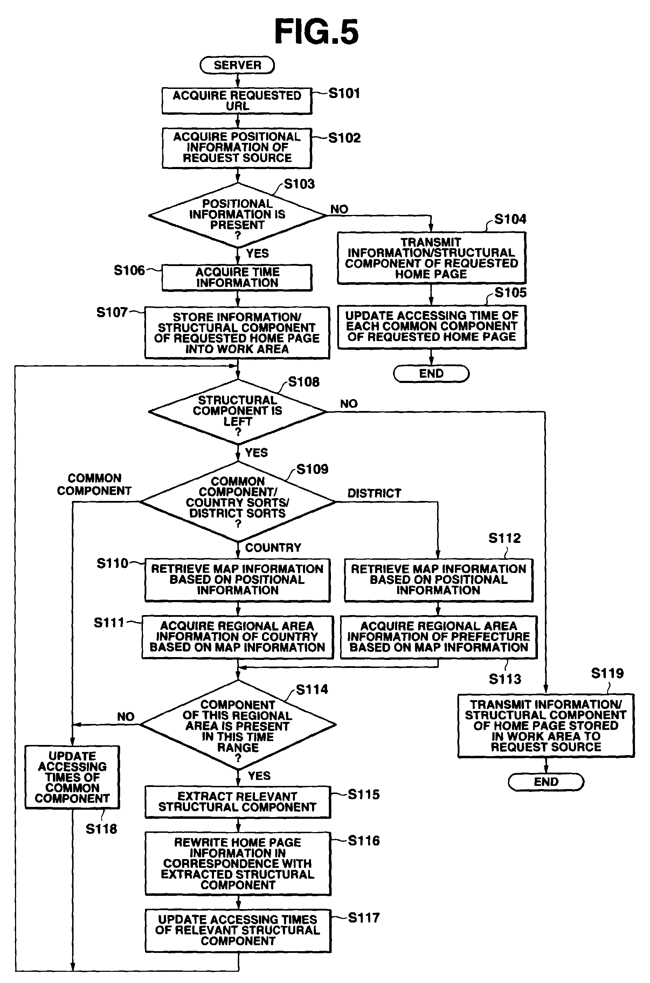

The CPU 11 executes a program (will be explained later) which is shown in a flow chart of Fig. 5 and previously stored in the storage apparatus 12.

The storage apparatus 12 stores thereinto the program executed by the CPU 11 and various data obtained by executing this program. Also, this storage apparatus 12 is used as a work area of the CPU 11. The communication control apparatus 13 is connected to the Internet 2 so as to control transmission/reception operations of information between the client 3A and the client 3B via the Internet 2.

The home page database 14 stores thereinto structural components of home pages with respect to sorts of regions and also time ranges. The storage content of the home page data 14 will be explained more in detail. The map database 15 stores thereinto a correspondence relationship between positional information and regional area information. It should be noted that these databases 14 and 15 may be realized by that these databases are provided in such a storage apparatus which is physically connected outside these databases, or may be provided in the storage apparatus 12.

The medium drive apparatus 16 drives the recording medium 17 mounted thereon, and reads out the program recorded on this recording medium 17, and then transfers the read program to the storage apparatus 12. The recording medium 17 is such a computer readable medium constituted by, for instance, a magnetic disk, an optical disk, an opto-magnetic disk, and so on. This recording medium 17 may be read by the medium drive apparatus 16. Such computer programs which are executed by the CPU 11 and are to be stored in the storage apparatus 12 are recorded on this recording medium 17.

### INTERNAL ARRANGEMENT OF CLIENT

Fig. 3 is a schematic block diagram for representing an internal arrangement of either the client 3A or the client 3B appearing in the network system of Figs. 1A and 1B. It should also be understood that since the internal arrangement of the client 3A is the same as the internal arrangement of the client 3B, only one internal arrangement thereof will be explained. That is, the client 3A is arranged by a personal computer, and provided with a CPU 31, a storage apparatus 32, a communication control apparatus 33, a display unit 34, a GPS (Global Positioning System) 35, and a medium drive apparatus 36. Another recording medium 37 is detachably mounted on the medium drive apparatus 36.

The display unit 34 is constituted by a display device such as a CRT (Cathode-Ray Tube), and an LCD (Liquid Crystal Display). The display unit 34 displays thereon a home page transmitted from the WWW server 1 in response to a request. The GPS 35 measures both longitude information and latitude information of present positions where the clients 3A and 3B are located by receiving electromagnetic waves transmitted from GPS satellites (not shown in detail), and then supplies the measured longitude/latitude information as positional information to the CPU 31.

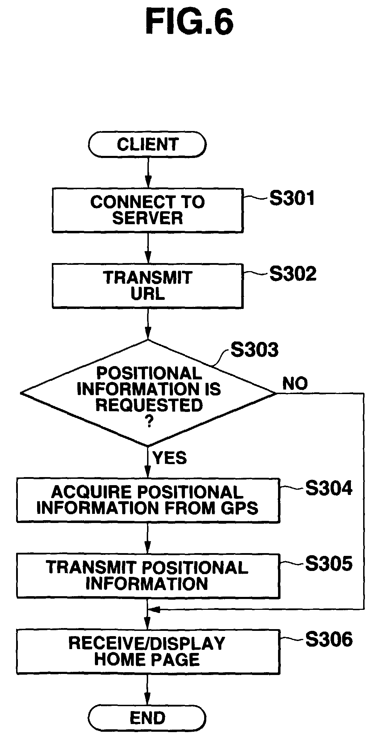

It should be noted that the CPU 31, the storage apparatus 32, the communication control apparatus 33, the medium drive apparatus 36, and the recording medium 37 employed in the client 3A, or 3B similarly correspond to those employed in the WWW server 1 except for the following aspects. That is, a computer program executed by this CPU 31 is defined in a flow chart of Fig. 6. Also, the content of the information transmitted/received by the communication control apparatus 33 is made opposite to that of the WWW server 1. In other words, the communication control apparatus 33 of this server transmits such information which is received by that of the WWW server 1, and vice verse.

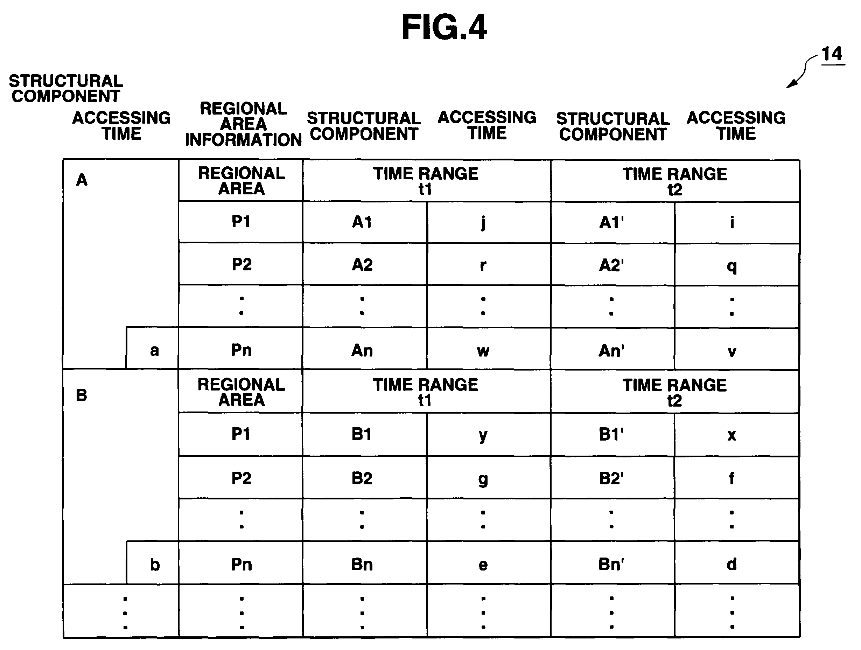

Fig. 4 is a diagram for representing an example of a storage format of home page information stored to the home page database 14 employed in the WWW server 1. As indicated in this drawing, the home page database 14 stores thereinto structural components (A1 to An, A1' to An', B1 to Bn, B1' to Bn') with respect to each of home page structural components (A, B). These structural components A1 to An, A1' to An', B1 to Bn, B1' to Bn' are rewritable as to sorts of regions P1 to Pn as well as time ranges t1 and t2. Also, the home page database 14 stores thereinto a total time of access operations with respect to default and rewritable structural components (A, A1 to An, A1' to An', B, B1 to Bn, B1' to Bn'). In other words, the home page database 14 stores thereinto a total number defined in the case that the information related to the relevant structural component is provided to the clients 3A and 3B.

For instance, in such a case that a transmission of this home page is requested by the client 3A located in the region P2 in the time range t1, as represented in Fig. 4, the structural component A in the default of this home page is rewritten by the structural component A2, and also the structural component B is rewritten by the structural component B2. Further, this home page database 14 indicates that the structural component A2 is accessed "r" times, namely this structural component A2 is transmitted to the client 3A only "r" times.

### OPERATIONS OF FIRST NETWORK SYSTEM

Next, a description will now be made of operations of the network system according to the first embodiment mode of the present invention. In this network system as shown in Figs. 1A and 1B, when the clients 3A and 3B request home pages customized for these clients 3A/3B, the WWW server 1 produces such home pages which are fitted to the regions where the clients 3A and 3B functioning as the home-page requesters are located, and also fitted to the time requested by these clients. Then, this WWW server 1 transmits the suitably produced (customized) home pages to the clients 3A and 3B functioning as the home-page requesters. Both the process operation executed by the WWW server 1 and the process operations executed by the clients 3A/3B in a series of the above-described system operation will now be described in detail as follows:

Fig. 5 is a flow chart for describing contents of the process operation executed by the WWW server 1. First, in this flow operation, when the communication control apparatus 13 (see Fig. 2) receives an URL (Uniform Resource Locator) of a home page whose transmission is requested by the client 3A, the CPU 11 acquires this URL (step S101). Next, the CPU 11 acquires the positional information thereof from the client 3A which requests the WWW server 1 to transmit the desirable home page (step S102).

This positional information acquiring operation is carried out as follows: For instance, in response to an instruction issued from the CPU 11, the communication control apparatus 13 sends the acquisition request of the positional information to the client 3A, and then in response to the acquisition request, the communication control apparatus 13 receives the positional information sent from the client 3A (will be explained later), and thereafter, the CPU 11 acquires this positional information. Next, the CPU 11 judges as to whether or not the positional information can be acquired from the client 3A (step S103).

When the CPU 11 judges that the positional information cannot be acquired, the CPU 11 extracts from the home page database 14, both the information of the home page and the structural component of the default which are described by using HTML (Hyper Text Mark-up Language) corresponding to the URL acquired at the step S101. Then, in response to the instruction issued from the CPU 11, the communication control apparatus 13 transmits the extracted home page information and the extracted structural component of the default to such a client which has transmitted this URL, namely to the client 3A which has requested the transmission of this customized home page (step S104).

Furthermore, the CPU 11 increments the total time of the accessing operation by "1", described in the access time column corresponding to the common components (structural components of default) of the home page related to the URL acquired at the step S101 so as to update the content of this access time column (step S105). Then, the process operation of the WWW server 1 is accomplished.

To the contrary, when the CPU 11 judges that the positional information can be acquired at the step S103, the CPU 11 acquires the time information as to when the client 3A requests the WWW server 1 to send the home page (step S106). The acquisition of this time information may be carried out as follows. For example, the CPU 11 may acquire time counted by an internal timer of this CPU 11. Alternatively, in such a case that the time information is added to the request issued from the client 3A, the CPU 11 may acquire this added time information.

Next, the CPU 11 extracts from the home page database 14, both the information of the home page and the structural component of the default of this home page which corresponds to the URL acquired at the step S101. Then, the CPU 11 stores the information and also default structural components of the extracted home page into the work area of the storage apparatus 12 (step S107). The CPU 11 sequentially investigates the structural components contained in the information of this home page in order that this CPU 11 judges as to whether or not a rewriting process operation defined from a step S109 to a step S118 is carried out (step S108).

When the CPU 11 judges that the structural component to which no rewriting process operation has been carried out is contained in this home page information, the CPU 11 makes the following judgement (step S109). That is, the CPU 11 uses the structural component of the default without executing the rewrite operation, or this judged structural component is rewritten in accordance with the country. Otherwise, this judged structural component is rewritten in accordance with the regional area.

In the case that the CPU 11 judges at the step S109 that the relevant structural component is rewritten in accordance with the country, the CPU 11 retrieves the map database 15 based upon the positional information acquired at the previous step S102 (step S110), and thus acquires regional area information related to this country corresponding to this positional information (step S111). Then, the server process operation is advanced to a further step S114.

In the case that the CPU 11 judges at the step S109 that the relevant structural component is rewritten in accordance with the regional area, the CPU 11 retrieves the map database 15 based upon the positional information acquired at the previous step S102 (step S112), and thus acquires regional area information related to this regional area corresponding to this positional information (step S113). Then, the server process operation is advanced to the further step S114.

On the other hand, when the CPU 11 judges at this step S109 that this relevant structural component is not rewritten in accordance with the positional information, but directly uses the common component of the default, the server process operation is advanced to a step S118.

At the step S114, the CPU 11 judges as to whether or not such a structural component which is to be rewritten in the time range containing the time information acquired at the step S106 is stored in the home page database 14 with respect to the region required at either the step S111 or the step S113. When the CPU 11 judges that the structural component to be rewritten is not stored in the home page database 14 in this time range, the server process operation is advanced to the step S118.

To the contrary, in the case that the CPU 11 judges that the structural component to be rewritten is stored in this time range, the CPU 11 extracts the corresponding structural component from the home page database 14 (step S115). Furthermore, the CPU 11 rewrites the information of the home page stored in the work area of the storage apparatus 12 by using the extracted structural component, and also replaces the structural component of the default stored within the work area by the above-explained structural component extracted at the step S115 (step S116).

In addition, the CPU 11 increments the access time by "1", which is described in the access time column recorded in the home page database 14 in correspondence with this structural component (step S117). Then, the server process operation is returned to the process operation defined at the step S108. At this step S108, the CPU 11 executes a similar judging operation with respect to the next structural component contained in the home page information stored in the work area of the storage apparatus 12.

At the step S118, the CPU 11 keeps this relevant structural component (in this case, structural component of default) remained, while this relevant structural component is stored in the work area of the storage apparatus 12. However, the CPU 11 increments the access time by "1", which is described in the access time column recorded in the home page database 14 in correspondence with this structural component. Then, the server process operation is returned to the process operation defined at the step S108. At this step S108, the CPU 11 executes a similar judging operation with respect to the next structural component contained in the home page information stored in the work area of the storage apparatus 12.

At the step S108, when the CPU 11 judges that there is no such a structural component to which no rewriting process operation has been performed, the communication control apparatus 13 transmits both the information and the structural component of the home page stored in the work area of the storage apparatus 12 to the client which has sent the URL in response to the instruction issued from the CPU 11, namely to the client 3A which has requested the WWW server 1 to transmit this home page (step S119). Then, this server process operation is ended.

### OPERATION OF CLIENT 3A

Fig. 6 is a flow chart for describing process operation executed by the client 3A. First, the communication control apparatus 33 of the client 3A sets a data link between the own communication control apparatus 33 and the communication control apparatus 13 of the WWW server 1 so as to logically connect a communication path between the client 3A and the WWW server 1 (step S301). When the communication path is connected between the WWW server 1 and the client 3A, the communication control apparatus 33 transmits an URL of such a home page which is required to be transmitted in response to an instruction issued from the CPU 31 (step S302).

Next, the CPU 31 judges as to whether or not the transmission of the positional information is requested from the WWW server 1 (step S303). When the transmission of the positional information is requested, the CPU 31 acquires both longitude data and latitude data as positional information, which are measured by the GPS 35 (step S304). In response to an instruction issued from the CPU 31, the communication control apparatus 33 transmits this acquired positional information via the Internet 2 connected to this communication path to the WWW server 1 (step S305). Then, the client process operation is advanced to a step S306.

On the other hand, in such a case that the CPU 31 judges at the step S303 that the transmission of the positional information is not requested, the client process operation is advanced to a step S306. At this step S306, the communication control apparatus 33 receives the home page which is sent from the WWW server 1 via the Internet 2, and then, the CPU 31 executes a preselected process operation to display this home page on the display unit 34. Then, this client process operation is accomplished.

### PRODUCING/REWRITING OPERATIONS OF HOME PAGE IN FIRST NETWORK SYSTEM

Subsequently, a detailed operation will now be made of producing of a home page by the WWW server 1 in the network system of the first embodiment mode.

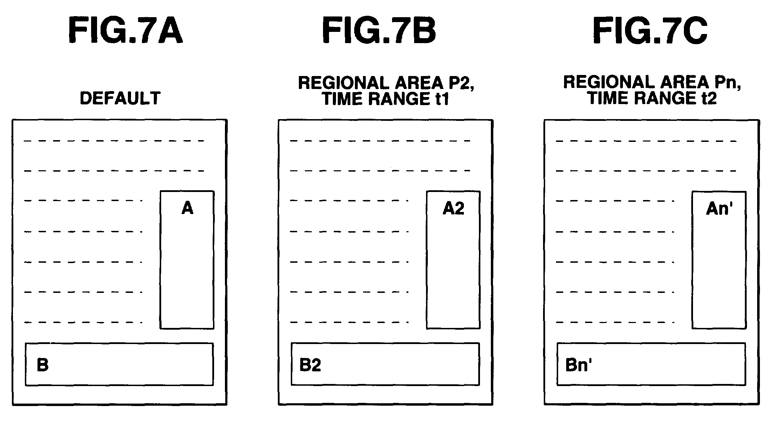

Fig. 7A illustratively shows an example of a home page of a default, which is transmitted from the WWW server 1 to the clients 3A and 3B. As indicated in this drawing, this home page contains a structural component "A" and another structural component "B" as a structural component which is rewritable, depending upon a regional area and a time range. In this example, it is now assumed that in the WWW server 1, such a home page is produced and is sent to the clients 3A and 3B functioning as the request sources. This home page is produced in such a manner that the structural components A and B are rewritten based upon the home page database 14 shown in Fig. 4.

Fig. 7B illustratively indicates another example of a home page which is produced and transmitted in such a case that an URL is transmitted from the client 3A located in a regional area P2 at a time instant within a time range "t1", and this client 3A requests the WWW server 1 to transmit the home page customized for this client 3A. In this example, the structural component "A" is rewritten into a structural component "A2", and also the structural component "B" is rewritten into another structural component "B2" based upon the home page data 14.

Fig. 7C illustratively indicates another example of a home page which is produced and transmitted in such a case that an URL is transmitted from the client 3B located in a regional area Pn at a time instant within a time range "t2", and this client 3B requests the WWW server 1 to transmit the home page customized for this client 3B. In this example, the structural component "A" is rewritten into a structural component "An'", and also the structural component "B" is rewritten into another structural component "Bn'" based upon the home page data 14.

Next, a concrete rewriting method will now be explained in a first case that a structural component contained in a home page and information of the home page described by the HTML are rewritten into image data based upon a regional area and a time range, and also in a second case that a structural component contained in a home page and information of the home page described by the HTML are written into character string data. It should be understood that as the description language, the HTML language is employed in this example. Alternatively, other home-page forming languages such as XML (Extensible Markup Language), and Jave may be similarly used.

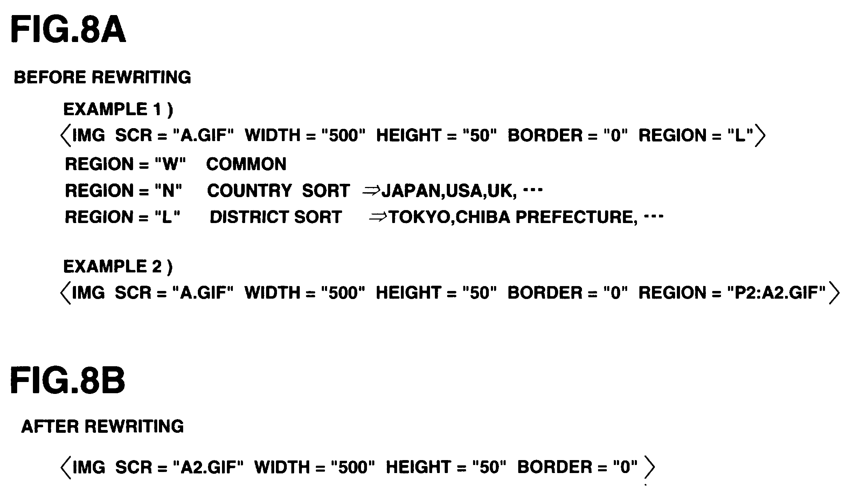

First, as indicated in Fig. 8A, the information of the home page in which the image data is rewritten in accordance with the image data may contain a tag of HTML - described 〈IMG SCR = "A.GIF" width = "500" height = "50" border = "0" region = "L"〉, or another tage of HTML - described 〈IMG SCR = "A.GIF" width = "500" height = "50" border = "0" region = "P2 : A2.GIF"〉. It is now assumed in the former example that when "L" is equal to P2, rewriting of such image data as "A.GIF" into another image data of "A2.GIF" is defined in the home page database 14.

Assuming now that the client 3A belonging to this regional area P2 requests the WWW server 1 to send this home page in this case, the above-described tag is rewritten as 〈IMG SCR = "A2.GIF" width = "500" height = "50" border = "0"〉, as indicated in Fig. 8B. Also, the structural component which constitutes this home page is rewritten from "A.GIF" to "A2.GIF." As a result, such a home page containing not "A.GIF", but "A2.GIF" is displayed on the display unit 34 of the client 3A functioning as the request source.

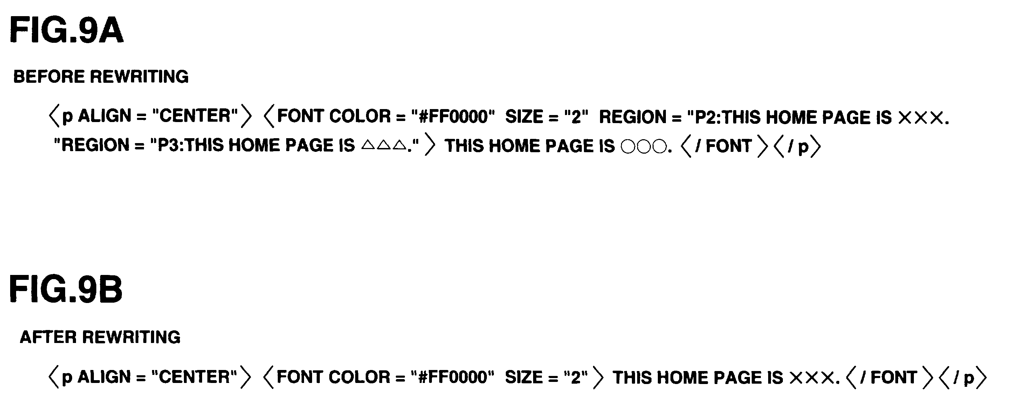

On the other hand, for instance, as shown in Fig. 9A, the information of the home page in which the character string data is rewritten in accordance with the regional area may contain information of HTML, namely 〈p align = "center"〉 〈font color = "#FF0000" size = "2" region "P2 : this home page is XXX. "region = "P3 = this home page is △△△".〉 This home page is OOO. 〈 / font〉 〈 / P〉.

In this case, assuming now that the client 3A belonging to the regional area P2 requests the WWW server 1 to send this home page, the above-explained information is rewritten as follows (see Fig. 9B):
〈p align = "center"〉 〈font color = "#FF0000" size = "2"〉
This home page is XXX.〈 / font〉 〈 / P〉. As a result, such a home page containing a character string "This home page is OOO" is not displayed on the display unit 34 of the client 3A functioning as the request source, but another home page containing a character string "This home page is XXX" is displayed on this display unit 34.

As previously explained, in the network system according to the first embodiment mode, the WWW server 1 may produce such a home page suitably customized in accordance with both the time range and the regional area where the clients 3A and 3B are located and also request this WWW server 1 to send such a customized home page, and then this WWW server 1 may transmit the suitably customized home page to the clients 3A and 3B functioning as the request source. As a result, the proper information can be provided while considering both the regional area and the time range. When the advertisement information is provided as information, the higher advertisement effects can be achieved.

Also, in accordance with the network system of this first embodiment mode, the unnecessary information contained in the home page which is transmitted from the WWW server 1 to the clients 3A and 3B can be suppressed as much as possible. This unnecessary information is not required with respect to the clients 3A and 3B as the request source. As a consequence, even when such information required for the user is provided, the size of the home page can be reduced, and furthermore, various resources such as the CPU 31 and the storage apparatus 32 of the clients 3A/3B and the Internet 2 are not uselessly consumed.

Furthermore, in the network system according to this first embodiment mode, the home page database 14 provided in the WWW server 1 stores a total access time of each of the respective structural components as to the sorts of regional areas and also the sorts of time ranges. As a result, the user of this network system can readily judge as to whether or not the information of which structural component has been provided by way of the customized home page, so that the user can easily reduce the total cost with respect to the advertisement, and furthermore can assist the updating operation of the subsequent home page by using the access times of the respective structural components.

### MODIFICATION OF FIRST NETWORK SYSTEM

The present invention is not limited to the above-described first embodiment mode, but may be modified, changed, or substituted. A description will now be made of various modifications of the first embodiment mode.

In the above-described network system of the first embodiment mode, the WWW server 1 transmits the positional information acquired by the GPS 35 employed in the clients 3A and 3B via the Internet 2 so as to acquire the positional information about the present positions of these clients 3A and 3B. However, the method for acquiring the positional information of the clients 3A and 3B by the WWW server 1 is not limited to the above-described acquiring method. For instance, the positional information may be alternatively entered by the users of the clients 3A and 3B, and this entered positional information may be transmitted to the WWW server 1.

Also, the WWW server 1 may acquire as positional information, such information related to access points from the clients 3A and 3B to the Internet 2. Furthermore, the WWW server 1 may contain such a database which stores thereinto positional information in connection with the respective IDs(identifiers) of the clients 3A and 3B. In this alternative case, the CPU 11 may retrieve this database based upon the ID of either the client 3A or the client 3B which requests the WWW server 1 to transmit the customized home page so as to acquire the positional information of the client 3A, or 3B.

Also, in the above-explained first embodiment mode, in the WWW server 1, the CPU 11 retrieves the map database 15 based upon the positional information received from the clients 3A and 3B so as to acquire the regional area information. Then, the CPU 11 extracts the structural component of the customized home page from the home page database 14 based upon both the time information and this acquired regional area information, and then rewrites the extracted structural component into the structural component contained in the home page of the default.

Alternatively, while the map database 15 is provided not in the WWW server 1, but in the clients 3A and 3B, the regional area information corresponding to the positional information measured by the GPS 35 may be transmitted from the clients 3A and 3B to the WWW server 1. Further, the structural component may be extracted from the home page database 14 without performing the converting operation to such a regional area information. In this alternative case, the home page database 14 may store thereinto the structural component of the home page in correspondence with the positional information.

Also, in the above-explained first embodiment mode, the WWW server 1 produces such a home page that the structural component thereof has been rewritten in accordance with the time range corresponding to the acquired time information. Alternatively, the WWW server 1 may produce such a home page that the structural component thereof is rewritten in accordance with a date, a week, a season and the like, which correspond to the acquired time information. In addition, a background of image data of a home page, or a background of the home page itself may be changed in accordance with both the positional information and the time information.

Also, in the above-explained first embodiment mode, the home page of the WWW server 1 which is provided via the Internet 2 is customized based upon both the regional area of the request source and the time range when this request is made. However, the present invention is not limited thereto. For example, the inventive idea of the present invention may be applied to other documents, e,g., documents provided via a closed-environmental commercial-purpose network such as Nifty-Serve (trademark) and PC-VAN (trademark).

Furthermore, in the above-explained first embodiment mode, the present invention is applied to such a network system arranged by the WWW server 1, and the clients 3A and 3B connected via the Internet 2 to this WWW server 1. Alternatively, the present invention may be similarly applied to other network systems, for example, such a portable telephone network that information requested from a portable telephone is transmitted to a base station by way of a wireless communication. For instance, when the present invention is applied to a PHS (Personal Handyphone System) network, positional information may be acquired at a position of an antenna through which electromagnetic waves are transmitted/received with respect to a PHS terminal.

### ARRANGEMENT OF SECOND NETWORK SYSTEM

An arrangement of a network system to which a second embodiment mode of the present invention is applied is similar to that of the network system shown in Fig. 1A. Also, an internal arrangement of a WWW server 1 is similar to that of the first embodiment mode shown in Fig. 2. Therefore, the arrangements of these network system and WWW server are omitted.

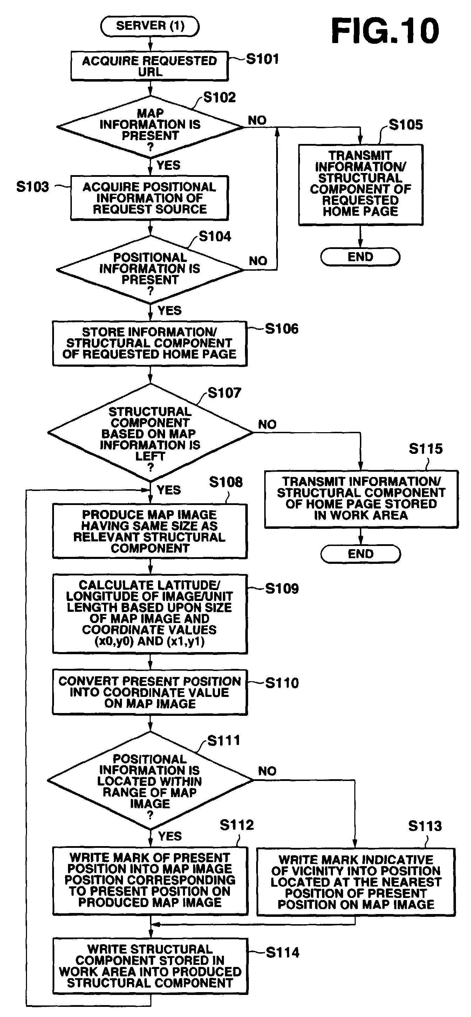

In this network system of this second embodiment mode, the CPU 11 executes a program (will be discussed later) which is described in a flow chart of Fig. 10 and stored in the storage apparatus 12. The storage apparatus 12 stores thereinto the program executed by the CPU 11 and data obtained by executing this program, and further, is used as a work area of the CPU 11. The communication control apparatus 13 controls transmission/reception of information between the clients 3A and 3B which are connected via the Internet 2 to each other.

The home page database 14 is produced by the WWW server 1. This home page database 14 stores thereinto information about customized home pages in correspondence with URLs (Uniform Resource Locators), which are transmitted to the clients 3A and 3B. The map database 15 stores thereinto a map of a regional area containing at least a peripheral area of a target area. It should be noted that these databases 14 and 15 may be realized by that these databases are provided in such a storage apparatus which is physically connected outside these databases, or may be provided in the storage apparatus 12.

The medium drive apparatus 16 drives the recording medium 17 mounted thereon, and reads out the program recorded on this recording medium 17, and then transfers the read program to the storage apparatus 12. The recording medium 17 is such a computer readable medium constituted by, for instance, a magnetic disk, an optical disk, an opto-magnetic disk, and so on. This recording medium 17 may be read by the medium drive apparatus 16. Such computer programs which are executed by the CPU 11 and are to be stored in the storage apparatus 12 are recorded on this recording medium 17.

Further, internal arrangements of the clients 3A and 3B are similar to those of the first embodiment mode shown in Fig. 3.

### OPERATIONS OF SECOND NETWORK SYSTEM

Next, a description will now be made of operations of the network system according to the second embodiment mode of the present invention. In this second network system, when the clients 3A and 3B request home pages customized for these clients 3A/3B, the WWW server 1 produces such home pages into which maps fitted to the regions where the clients 3A and 3B functioning as the home-page requesters are located, are assembled, or merged. Then, this WWW server 1 transmits the suitably produced (customized) home pages to the clients 3A and 3B functioning as the home-page request sources. Both the process operation executed by the WWW server 1 and the process operations executed by the clients 3A/3B in a series of the above-described system operation will now be described in detail as follows:

Fig. 10 is a flow chart for describing contents of the process operation executed by the WWW server 1. First, in this flow operation, when the communication control apparatus 13 (see Fig. 2) receives URLs (Uniform Resource Locators) of home pages whose transmissions are requested by the client 3A and the client 3B, the CPU 11 acquires these URLS (step S101). Next, the CPU 11 accesses the home page database 14 in accordance with the acquired URLs, and judges as to whether or not such a home page corresponding to the URLs contains map information (step S102). This map information indicates that an image of a map is pasted. When the CPU 11 judges that this accessed home page contains the map information, the CPU 11 acquires the positional information from the clients 3A and 3B which request the WWW server 1 to transmit the customized home page (step S103).

This positional information acquiring operation is carried out as follows: For instance, in response to an instruction issued from the CPU 11, the communication control apparatus 13 sends the acquisition request of the positional information to the client 3A and the client 3B, and then in response to the acquisition request, the communication control apparatus 13 receives the positional information sent from the client 3A and the client 3B (will be explained later), and thereafter, the CPU 11 acquires this positional information. Next, the CPU 11 judges as to whether or not the positional information can be acquired from the client 3A and the client 3B (step S104).

When the CPU 11 judges that the home page does not contain the map information at the step S102, the positional information cannot be acquired at the step S104, the CPU 11 extracts from the home page database 14, both the information of the home page and the structural component containing the map of the default which are described by using the HTML (Hyper Text Mark-up Language) corresponding to the URLs acquired at the step S101. Then, in response to the instruction issued from the CPU 11, the communication control apparatus 13 transmits the extracted home page information and the extracted structural component of the default to such clients which have transmitted the URLs, namely to the client 3A and the client 3B which have requested the transmission of this customized home page (step S105).

To the contrary, when the CPU 11 judges that the positional information can be acquired at the step S104, the CPU 11 extracts from the home page database 14, both the information of the home page and the structural component containing the map of the default of this home page which corresponds to the URL acquired at the step S101. Then, the CPU 11 stores the information and also default structural components of the extracted home page into the work area of the storage apparatus 12 (step S106). The CPU 11 sequentially investigates the map information contained in the information of this home page in order that this CPU 11 judges as to whether or not a rewriting process operation defined from a step S108 to a step S114 is carried out (step S107).

When the CPU 11 judges that the home page information contains such map information whose map has not yet been rewritten, the CPU 11 produces an image of a map having the same size (dimension) as that of the structural component to be prossed with reference to the map database 15 (step S108). Nest, the CPU 11 calculates longitude of the map image and also latitude thereof per unit length based upon the size of the map image, a coordinate value (x0, y0) at a lower left position of this map image, and a coordinate value (x1, y1) at an upper right position thereof (step S109). In this case, it should be noted that the coordinate value (x0, y0) at the lower left position of the map image indicates the latitude of this map image, whereas the coordinate value (x1, y1) at the upper right position thereof represents the longitude thereof.

Based upon the calculated longitude/latitude per unit length, the CPU 11 converts positions where both the clients 3A and 3B functioning as the request sources are presently located (will be referred to as "present positions" hereinafter) into coordinate values on the map image (step S110). The present positions are indicated by the positional information acquired at the step S103. The CPU 11 judges as to whether or not the present positions are present within the range of the map image based upon the converted coordinate values (step S111).

When the CPU 11 judges that the present position is located with the range of the map image, the CPU 11 writes a preselected mark indicative of the present positions into such positions corresponding to the present positions on the map image produced at the step S108 (step S112). Then, the server process operation is advanced to a further step S114. On the other hand, when the CPU 14 judges that the present positions are located outside the range of the map image, the CPU 11 writes a preselected mark into such positions located at the nearest positions with respect to the present positions on the map image produced at the step S108 (step S113). It should also be noted that the CPU 11 may directly draw the mark on the map image in the process operations defined at the steps S112 and S113. Furthermore, the CPU 11 may write the mark on the map image produced at the step S108, and thereafter the CPU 11 may synthesize this map image with such map information which is described as default on the home page. As a result, such a map image on which the mark and the map are described may be obtained. Then, the server process operation is advanced to the process operation defined at the step S114.

At this step S114, the CPU 11 rewrites the structural component of the map stored in the work area of the storage apparatus 12 into the above-explained map image into which the mark has been written at either the step S112 or the step S113. Then, the server process operation is returned to the previous step S107. At this step S107, the CPU 11 executes a similar judgement as to a structural component of the subsequent map which is contained in the information of the home page saved in the work area of the storage apparatus 109.

At the step S107, when the CPU 11 judges that there is no such a structural component to which no map rewriting process operation has been performed, the communication control apparatus 13 transmits both the information and the structural component of the home page stored in the work area of the storage apparatus 12 to the clients which have sent the URLs in response to the instruction issued from the CPU 11, namely to the client 3A and the client 3B, which have requested the WWW server 1 to transmit this customized home page (step S115). Then, this server process operation is ended.

### OPERATION OF CLIENTS 3A/3B

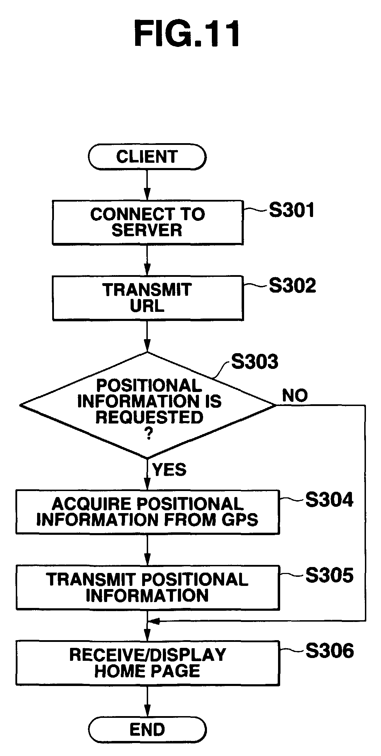

Fig. 11 is a flow chart for describing process operation executed by the client 3A and the client 3B. First, the communication control apparatuses 33 of the client 3A and the client 3B set data links between the own communication control apparatuses 33 and the communication control apparatus 13 of the WWW server 1 so as to logically connect communication paths between the clients 3A/3B and the WWW server 1 (step S301). When the communication path is connected between the WWW server 1 and the client 3A and the client 3B, the communication control apparatuses 33 transmit URLs of such home pages which are required to be transmitted in response to an instruction issued from the CPU 31 (step S302).

Next, the CPU 31 judges as to whether or not the transmission of the positional information is requested from the WWW server 1 (step S303). When the transmission of the positional information is requested, the CPU 31 acquires both longitude data and latitude data as positional information, which are measured by the GPS 35 (step S304). In response to an instruction issued from the CPU 31, the communication control apparatuses 33 transmit this acquired positional information via the Internet 2 connected to these communication paths to the WWW server 1 (step S305). Then, the client process operation is advanced to a step S306.

On the other hand, in such a case that the CPU 31 judges at the step S303 that the transmissions of the positional information are not requested, the client process operation is advanced to a step S306. At this step S306, the communication control apparatuses 33 receive the customized home pages which are sent from the WWW server 1 via the Internet 2, and then, the CPU 31 executes a preselected process operation to display this home page on the display unit 34. Then, this client process operation is accomplished.

### PRODUCING/REWRITING OPERATIONS OF HOME PAGE IN SECOND NETWORK SYSTEM

Subsequently, a detailed operation will now be made of producing of a home page by the WWW server 1 in the network system of the second embodiment mode.

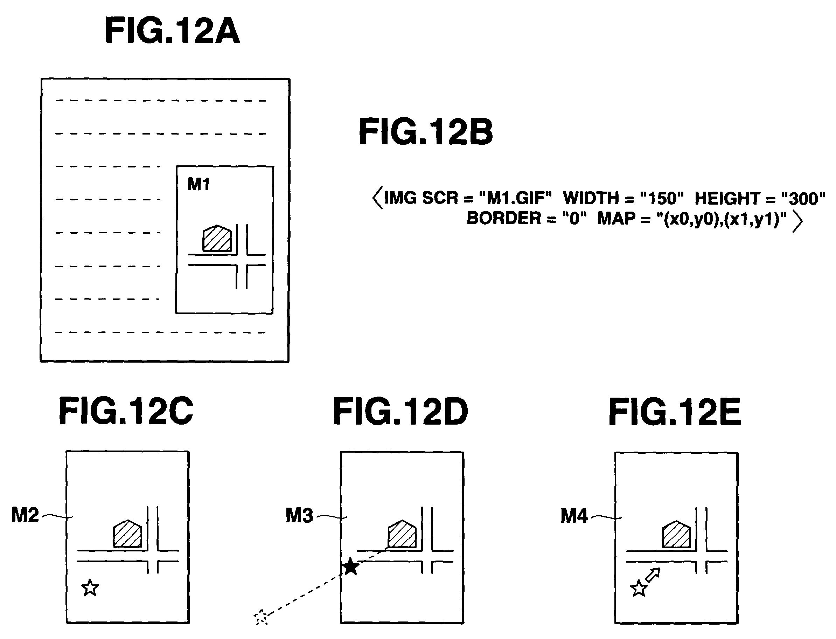

It is now assumed that as shown in Fig. 12A, there is an example of a home page containing a map image M. For instance, this home page contains such a tag of HTML as 〈 IMG SCR = "M.GIF" width = "150" height = "300" border = "0" map = "(x0, y0), (x1, y1)" 〉. In this case, both the longitude and the latitude indicated by the coordinate values (x0, y0), (x1, y1) correspond to coordinate values of points located at the lower left direction of M.GIF and the upper right direction of M.GIF. It should be understood that as the description language, the HTML language is employed in this example. Alternatively, other home-page forming languages such as XML (Extensible Markup Language), and Jave may be similarly used.

In this case, in such a case that the present positions of the client 3A and the client 3B functioning as the request sources are contained in the range of the map image M, as indicated in Fig. 12C, the CPU 11 may produce such a customized home page containing a map image "M" in which a mark (indicated by symbol "star") representative of the present positions is written into another map image "M" where a position of a target place (indicated by pentagon with hatched line) is previously illustrated.

To the contrary, in the case that the present positions of the clients 3A and 3B functioning as the request sources are not contained in the range of the map image M, the CPU 11 may produce such a home page containing another map image "M" as indicated in Fig. 12D. In this map image "M", both the position of the target place and a position (indicated by symbol "star") located at the nearest position from the present positions (indicated by block-line symbol "star")

When the present positions of the clients 3A and 3B functioning as the request sources are contained in the range of the map image M, as represented in Fig. 12E, the CPU 11 calculates a direction defined from the present position to the target place, and thus, may display an arrow indicative of the direction defined from the present position to the target place in combination with such a mark which represents the position of the target place and the present position. It should be understood that in order to produce such map images as shown in Fig. 12D and Fig. 12E, both the latitude and the longitude, which correspond to the target place of the map image M, have been previously described in the home page and the like.

As previously explained, in accordance with the network system of the second embodiment mode, the WWW server 1 adds not only the position of the target place, but also such a mark indicative of either the present positions of the clients 3A/3B or the vicinity position to the map image contained in the customized home pages which are transmitted to the clients 3A and 3B functioning as the request sources. As a consequence, the users of these clients 3A and 3B can readily grasp the present places on the map, and therefore, can easily seek the route directed to the target place.

### THIRD NETWORK SYSTEM

An arrangement of a network system to which a third embodiment mode of the present invention is applied is the same as that of the second embodiment mode. It should be noted that in this third embodiment mode, a customized home page which is produced by the WWW server 1 contains guide information, and this WWW server 1 need not contain the map database 15. The guide information corresponds to location information indicative of both a direction and a distance up to a target place by using a character string. Also, in this third embodiment mode, only the operation of the WWW server 1 is different from that of the first embodiment mode.

### OPERATION OF THIRD NETWORK SYSTEM

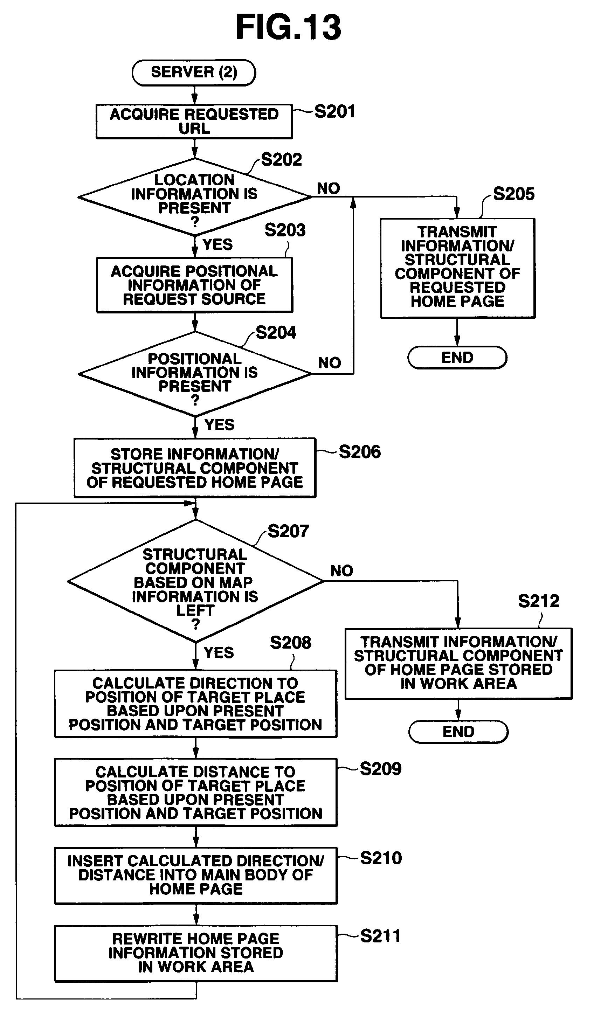

Fig. 13 is a flow chart for describing process operations executed by the WWW server 1 employed in the network system of the third embodiment mode. It should also be noted that process operations defined from a step S201 to a step S206 in this flow chart are essentially identical to those of the second embodiment mode except for a judgement made by the CPU 11 as to whether or not a home page corresponding to the URL acquired at the step S201 contains "location information."

When both the information of the home page and the structural component thereof are stored into the work area of the storage apparatus 12 at the step S206, the CPU 11 sequentially checks the target place contained in the location information, and judges as to whether or not there is such a target place to which the location writing process operation has not yet been carried out defined from the next step S208 to a further step S211 (step S207).

When the CPU 11 judges that there is such a target place to which the location writing process operation has not yet been carried out, this CPU 11 calculates a direction defined from a present position up to a position of a target place based upon the present position (longitude/latitude) indicative of the positional information acquired at the step S203 and a position (longitude/latitude) of such a target place to be processed (step S208). Furthermore, this CPU 11 calculates a distance between the present position and the target place (step S209).

Next, the CPU 11 inserts both the direction and the distance, which are calculated at the steps S208 and S209, into a predetermined position of a main body of a customized home page (step S210), and then deletes a tag so as to rewrite the information of the home page stored in the work area of the storage apparatus 12 (step S211). Then, the server process operation is returned to the previous process operation defined at the step S207. At this step S207, the CPU 11 executes a similar judging operation with respect to the next target place contained in the location information stored in the work area of the storage apparatus 12.

At the step S207, when the CPU 11 judges that there is no such a target place to which no location writing operation has been performed, the communication control apparatus 13 transmits both the information and the structural component of the home page stored in the work area of the storage apparatus 12 to the clients which have sent the URLs in respect to the instruction issued from the CPU 11, namely to the client 3A and the client 3B which have requested the WWW server 1 to transmit this customized home page (step S212). Then, this server process operation is ended.

Next, a detailed description will now be made of a home page production by the WWW server 1 according to this third embodiment mode based upon a concrete example.

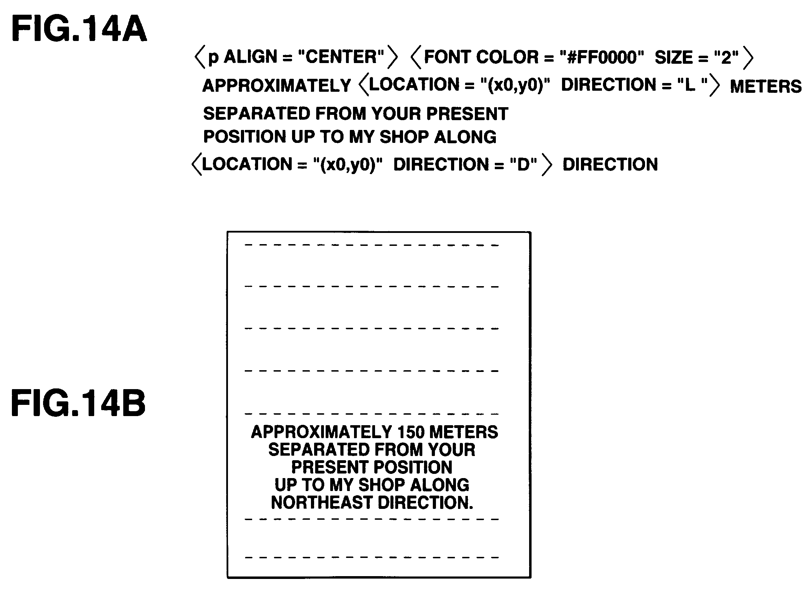

This home page may contain a description of the HTML as indicated in Fig. 14A. The HTML language location = "(x0, y0" describes both latitude and longitude of a target place, and the HTML language direction = "D" describes that acquired direction data is inserted into this position of a sentence. Similarly, the HTML language distance = "L" describes that acquired distance data is inserted into this position of a sentence. In this case, the following assumption is made. That is, the direction defined from the present own position of the clients 3A and 3B functioning as the request sources up to the target place (namely, my shop in this case) is "northeast", and the distance between them is approximately 150 meters. As a result, characters "northeast" and "distance" are inserted into the sentence described by the HTML language, so that such a customized home page as shown in Fig. 14B may be produced by the WWW server 1.

As previously explained, in the network system according to this third embodiment mode, the WWW server 1 calculates both the directions and the distances defined from the present own positions of the clients 3A/3B functioning as the request sources up to the position of the target place. Then, the WWW server 1 adds the calculated directions and distances as the sentence to the customized home page. As a consequence, the users of the clients 3A and 3B can readily grasp how these users may advance from the present own positions to the target place.

### MODIFICATION OF SECOND AND THIRD NETWORK SYSTEMS

The present invention is not limited to the above-described second and third embodiment modes, but may be modified, changed, or substituted. A description will now be made of various modifications of the second and third embodiment modes.

In the above-described network system of the second embodiment mode, the WWW server 1 produces the map image from the map data stored in the map database 15, writes the mark indicative of either the present positions or the vicinity positions thereof into this map image, and then uses this map image with this mark as the structural component of the home pages which will be transmitted to the clients 3A and 3B functioning as the request sources. Alternatively, while the WWW server 1 writes the mark indicative of either the present positions or the vicinity positions thereof into such a map which is contained in the home page as default, this WWW server 1 may transmits the resulting map with the mark to the client 3A and the client 3B functioning as the request sources. In this alternative case, various information such as the longitude and latitude data of the target place may be added to the map of the default.

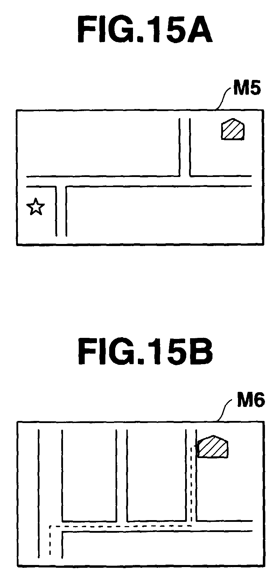

Also, in the above-explained second embodiment mode, when the present positions are not contained in the range of the map image produced by the CPU 11, the CPU 11 writes the mark into the position located at the nearest position from the present position on the map image. Alternatively, as indicated in Fig. 15A and Fig. 15B, the CPU 11 may reduce, or enlarge a size of a map image M1 in such a manner that both a present position (indicated by mark "star") and a position of a target place (indicated by pentagon with hatched line). In this alternative case, the CPU 11 may produce such a map image which contains both the present position and the position of the target place with reference to the map database 15, and then may reduce the size of this map image up to a preselected size. Furthermore, while a plurality of maps whose sized are different from each other are prepared as the structural component of the home page, the CPU 11 may selectively use such a map image capable of containing both the present position and the position of the target place.

Furthermore, as indicated in Fig. 15B, the CPU 11 may seek a desirable route defined from the present position up to the position of the target place on the map images M1 and M2, and then may add a mark (indicated by broken line) indicative of the sought route to these map images M1 and M2. As a result, the user of the clients 3A and 3B functioning as the request sources may easily grasp the route defined from the present position up to the target place. Furthermore, the CPU 11 may indicate the sought route in the form of a sentence.

In the above-described network systems of the second and third embodiment modes, the WWW server 1 transmits the positional information acquired by the GPS 35 employed in the clients 3A and 3B via the Internet 2 so as to acquire the positional information about the present positions of these clients 3A and 3B. However, the method for acquiring the positional information of the clients 3A and 3B by the WWW server 1 is not limited to the above-described acquiring method. For instance, addresses of the present positions may be alternatively entered by the users of the clients 3A and 3B, and these entered addresses may be transmitted to the WWW server 1.

Furthermore, the WWW server 1 may contain such a database which stores thereinto positional information in connection with the respective IDs(identifiers) of the clients 3A and 3B. In this alternative case, the CPU 11 may retrieve this database based upon the ID of either the client 3A or the client 3B which requests the WWW server 1 to transmit the customized home page so as to acquire the positional information of the client 3A, or 3B.

Also, in the above-explained second and third embodiment modes, the home page of the WWW server 1 which is provided via the Internet 2 is customized based upon both the regional area of the request source and the time range when this request is made. However, the present invention is not limited thereto. For example, the inventive idea of the present invention may be applied to other documents, e,g., documents provided via a closed-environmental commercial-purpose network such as Nifty-Serve (trademark) and PC-VAN (trademark).

Furthermore, in the above-explained second and third embodiment modes, the present invention is applied to such a network system arranged by the WWW server 1, and the clients 3A and 3B connected via the Internet 2 to this WWW server 1. Alternatively, the present invention may be similarly applied to other network systems, for example, such a portable telephone network that information requested from a portable telephone is transmitted to a base station by way of a wireless communication. For instance, when the present invention is applied to a PHS (Personal Handyphone System) network, positional information may be acquired at a position of an antenna through which electromagnetic waves are transmitted/received with respect to a PHS terminal.

## Claims

1. A document producing apparatus comprising:
structural component storage means (14) for storing thereinto plural structural components of plural documents in correspondence with a plurality of positional information;
request receiving means (11, FIG. 5 S101, FIG. 10 S101) for receiving a request issued from a client;
positional information acquiring means (11, FIG. 5 S102∼S103, FIG. 10 S102∼S104) for acquiring positional information of the client which issues the request received by said request receiving means;
structural component extracting means (11, FIG. 5 S107∼S113, FIG. 10 S106∼S110) for extracting a structural component of a document in correspondence with the positional information acquired by said positional information acquiring means from said structural component storage means;
document producing means (11, FIG. 5 S114∼S116, FIG. 10 S111∼S114) for producing a document to be transmitted based upon the structural component of the document extracted by said structural component extracting means; and
document transmitting mens (11, FIG. 5 S119, FIG. 10 S113) for transmitting said document produced by said document producing means via a communication line to said client which issues said request.

2. A document producing apparatus as claimed in claim 1 wherein:
said document producing apparatus is further comprised of:
regional area information storing means (14) for storing thereinto a plurality of regional area information in correspondence with said plurality of positional information; and
regional area information acquiring means (11, FIG. 5 S109) for acquiring such regional area information corresponding to the positional information acquired by said regional area information acquiring means from said regional area information storage means; and wherein:
said structural component extracting means (11, FIG. 5 S110∼S113) extracts a structural component of a document in correspondence with the regional area information acquired by said regional area information acquiring means from said structural component storage means.

3. A document producing apparatus as claimed in claim 1, or claim 3 wherein:
said document producing apparatus is further comprised of:
time information acquiring means (11, FIG. 5 S106) for acquiring predetermined time information when said request receiving means receives a request;
said structural component storage means further stores thereinto a structural component of a document in correspondence with the time information; and
said structural component extracting means further extracts the structural component of the document in correspondence with the time information acquired by said time information acquiring means from said structural component storage means.

4. A document producing apparatus as claimed in any one of the preceding claims 1 to 3 wherein:
said structural component storage means further stores thereinto a total extracting time by said structural component extracting means every structural component; and
said document producing apparatus is further comprised of;
extracting time updating means for updating the total extracting time stored in said structural component storage means when said structural component extracting means extracts the structural component, said total extracting time corresponding to said structural component.

5. A document producing apparatus as claimed in any one of the preceding claims 1 to 4 wherein:
said document producing means rewrites a structural component contained in a document of default by using the structural component of the document extracted by said structural component extracting means.

6. A document producing apparatus as claimed in claim 5 wherein:
said structural component contained in the document of the default includes discrimination information indicative of a document to be rewritten.

7. A document producing method comprising:
a structural component storing step (14) for previously storing thereinto plural structural components of plural documents in correspondence with a plurality of positional information;
a request receiving step (11, FIG. 5 S101, FIG. 10 S101) for receiving a request issued from a client;
a positional information acquiring step (11, FIG. 5 S102∼S103, FIG. 10 S102∼S104) for acquiring positional information of the client which issues the request received by said request receiving step;
a structural component extracting step (11, FIG. 5 S107∼S113, FIG. 10 S106∼S110) for extracting a structural component of a document in correspondence with the positional information acquired by said positional information acquiring step from said previously stored structural components;
a document producing step (11, FIG. 5 S114∼S116, FIG. 10 S111∼S114) for producing a document to be transmitted based upon the structural component of the document extracted at said structural component extracting step; and
a document transmitting step (11, FIG. 5 S119, FIG.10 S113) for transmitting said document produced at said document producing step via a communication line to the client which issues said request.

8. A document producing method comprising:
a structural component storing step (14) for previously storing thereinto plural structural components of plural documents in correspondence with a plurality of time information;
a request receiving step (11, FIG. 5 S101) for receiving a request issued from a client;
a time information acquiring step (11, FIG. 5 S106) for acquiring predetermined time information when the request is received by said request receiving step;
a structural component extracting step (11, FIG. 5 S114∼S115) for extracting a structural component of a document in correspondence with the time information acquired by said time information acquiring step from said previously stored structural components;
a document producing step (11, FIG. 5 S116) for producing a document to be transmitted based upon the structural component of the document extracted at said structural component extracting step; and
a document transmitting step (11, FIG. 5 S119) for transmitting said document produced at said document producing step via a communication line to the client which issues said request.

9. A computer readable recording medium for recording thereon a program used to operate a computer as:
structural component storage means for storing thereinto plural structural components of plural documents in correspondence with a plurality of positional information;
positional information acquiring means for acquiring positional information of a document request source;
structural component extracting means for extracting a structural component of a document in correspondence with the positional information acquired by said positional information acquiring means from said structural component storage means; and
document producing means for producing a document to be transmitted based upon the structural component of the document extracted by said structural component extracting means.

10. A computer readable recording medium for recording thereon a program used to operate a computer as:
structural component storage means for storing thereinto plural structural components of plural documents in correspondence with a plurality of time information;
time information acquiring means for acquiring time information when a transmission of a document is issued;
structural component extracting means for extracting a structural component of a document in correspondence with the time information acquired by said time information acquiring means from said structural component storage means; and
document producing means for producing a document to be transmitted based upon the structural component of the document extracted by said structural component extracting means.

11. A document producing apparatus comprising:
request receiving means (11, FIG. 13 S201) for receiving a request issued from a client;
positional information acquiring means (11, FIG. 13 S202∼S204) for acquiring positional information of the client which issues the request received by said request receiving means;
guide information producing means (11, FIG. 13 S208∼S210) for producing guide information defined from a location indicated by said positional information up to a preselected location based upon the positional information acquired by said information acquiring means;
document producing means (11, FIG. 13 S208∼S211) for producing a document with which the guide information produced by said guide information producing means is combined; and
document transmitting means (11, FIG. 13 S212) for transmitting said document produced by said document producing means via a communication line to said client which issues said request.

12. A document producing apparatus as claimed in claim 11 wherein:
said document producing apparatus is further comprised of:
map storage means for storing therein a map of a range which contains at least said preselected location; and
said guide information producing means produces as the guide information, such a map containing said preselected location and a location indicated by the positional information acquired by said positional information acquiring means based upon the map stored in said map storage means.

13. A document producing apparatus as claimed in claim 11 wherein:
said guide information producing means is comprised of:
means for drawing a predetermined symbol on the location appearing on a map produced as the guide information, said location being indicated by the positional information acquired by said positional information acquiring means.

14. A document producing apparatus as claimed in claim 13 wherein:
said guide information producing means is comprised of:
means for drawing a route appearing on a map produced as the guide information, said route being defined from a location indicated by the positional information acquired by said positional information acquiring means up to said preselected location.

15. A document producing apparatus as claimed in claim 11 wherein:
said guide information producing means is comprised of:
means for calculating both a direction and a distance, defined from a location indicated by the positional information acquired by said positional information acquiring means up to a preselected location; and
said document producing means produces a document formed by combining both the direction and the distance calculated by said guide information producing means into a sentence.

16. A document producing method comprising:
a request receiving step for (11, FIG. 13 S201) receiving a request issued from a client;
a positional information acquiring step (11, FIG. 13 S202∼S204) for acquiring positional information of the client which issues the request received by said request receiving step;
a guide information producing step (11, FIG. 13 S208∼S210) for producing guide information defined from a location indicated by said positional information up to a preselected location based upon the positional information acquired by said information acquiring step;
a document producing step (11, FIG. 13 S208∼S211) for producing a document with which the guide information produced by said guide information producing step is combined; and
a document transmitting step (11, FIG. 13 S212) for transmitting said document produced by said document producing step via a communication line to said client which issues said request.

17. A computer readable recording medium for recording thereon a program used to operate a computer as:
positional information acquiring means for acquiring positional information of a document request source;
guide information producing means for producing guide information defined from a location indicated by said positional information and a preselected location; and
document producing means for producing such a document with which said guide information produced by said guide information producing means is combined.
